# EUROPEAN PATENT SPECIFICATION

(11) **EP 2 752 503 B1**
(45) Date of publication and mention of the grant of the patent: **22.03.2017**
(21) Application number: 12826944.6
(22) Date of filing: 29.08.2012
(51) Int. Cl.: C23C 18/12, C09D 1/00, C09D 5/08, C09D 5/44, C23C 22/74, H01F 1/18

(54) **ELECTROMAGNETIC STEEL SHEET HAVING INSULATING COATING**
ELEKTROMAGNETISCHES STAHLBLECH MIT ISOLIERENDER BESCHICHTUNG
TÔLE D'ACIER ÉLECTROMAGNÉTIQUE AYANT UN REVÊTEMENT ISOLANT

(30) Priority: 31.08.2011 JP 2011190155
(43) Date of publication of application: 09.07.2014
(73) Proprietor: JFE Steel Corporation, Tokyo, 100-0011 (JP)
(72) Inventor: FUJIBAYASHI, Nobue, Tokyo 100-0011 (JP); SASHI, Kazumichi, Tokyo 100-0011 (JP); OKUMURA, Yusuke, Tokyo 100-0011 (JP); OSHIMA, Yasuhide, Tokyo 100-0011 (JP); KUBOTA, Takahiro, Tokyo 100-0011 (JP); NAGOSHI, Masayasu, Tokyo 100-0011 (JP)
(74) Representative: Grünecker Patent- und Rechtsanwälte PartG mbB
(86) International application number: PCT/JP2012/005423
(87) International publication number: WO 2013/031200

(56) References cited:
- DE-A1-102004 049 413
- DE-A1-102005 005 334
- DE-A1-102008 039 326
- JP-A- H04 249 588
- JP-A- H09 323 066
- JP-A- 2003 253 462
- US-A1- 2010 015 339

## Description

### TECHNICAL FIELD

The present invention relates to an electrical steel sheet with an insulation coating. The present invention relates in particular to an electrical steel sheet with an insulation coating excellent in punchability, coating adhesion property and coating film property after annealing, even without containing any chromium compound in the insulation coating.

### BACKGROUND ART

An insulation coating applied to an electrical steel sheet used for motors, transformers and the like is required to have various properties such as not only interlaminar resistance but also coating adhesion property, punchability, and weldability and so on. Since electrical steel sheets are used in a variety of applications, it is attempted to develop various insulation coatings depending upon the application. When an electrical steel sheet is subjected to punching, shearing, bending, or the like, magnetic properties are deteriorated due to residual strain, so that stress relief annealing at a temperature of about 700 °C to 800 °C is frequently conducted for solving this problem. In this case, therefore, the insulation coating must be resistant to the stress relief annealing.

Insulation coatings applied to electrical steel sheets are roughly classified into three types:
(1) Inorganic coating placing great importance on weldability and heat resistance, and being resistant to stress relief annealing;
(2) Resin-containing inorganic coating aimed at achieving both punchability and weldability, and achieving resistance to stress relief annealing (i.e., semi-organic coating); and
(3) Organic coating being unable to be subjected to stress relief annealing in a special application.
However, only the coatings containing an inorganic component of types (1) and (2) above are resistant to the stress relief annealing as general-purpose product, and both of them have been used to normally contain a chromium compound.

For example, JP 02-038582A (PTL 1) discloses an electrical steel sheet with an insulation coating including two layers of a silicate coating and an upper coating containing chromic acid, on the surface of the electrical steel sheet. At least one of the two layers in the insulation coating contains a silane coupling agent, thereby improving the properties such as coating adhesion property of the insulation coating with respect to the electrical steel sheet. This technique corresponds to the technique of (2) above.

However, as environmental awareness is rising in recent years, chromate free products having an insulation coating free of chromium compound are demanded by consumers even in the field of electrical steel sheets.

JP 2010-255105A (PTL 2) discloses a technique for forming a surface-treatment film free of chromium compound as applied, though, to a zinc or zinc alloy coated steel sheet (galvanized steel sheet), in order to obtain a galvanized steel sheet excellent in properties such as corrosion resistance and coating adhesion property. The galvanized steel sheet comprises a surface-treatment film obtained by applying a surface-treatment agent to a surface of the steel sheet and drying the surface-treatment agent, wherein the surface-treatment agent contains a water-soluble zirconium compound, tetraalkoxysilane, an epoxy-group-containing compound, a chelating agent, a vanadate compound, and a metal compound containing one or more metals selected from the group consisting of titanium, aluminum, and zinc at predetermined ratios.

### CITATION LIST

### Patent Literature

PTL 1: JP 02-038582A
PTL 2: JP2010-255105A

DE 10 2005 005334 A1 relates to a coated metal substrate, wherein the coating comprises a silicon-based primer layer, and provided thereon a further coating having a thickness of 300 nm or less.

DE 10 2008 039326 A1 discloses a process for producing an insulation coating on an electric steel substrate. In order to provide the desired insulation coating, it is suggested to employ a sol-gel-process, wherein silane monomers, such as tetraethoxyorthosilane and methyltriethoxysilane are employed. These monomers are reacted to yield a sol, which is then coated onto the desired substrate, followed by drying and pyrolytic treatment in order to obtain the desired coating.

US 2010/015339 A1 relates to a method for corrosion protection of a metal surface, comprising:
coating a corrosion protection composition on said metal surface thereby obtaining a coating; and
curing said coating at a temperature of from 20 to 120°C, to obtain a cured coating;
wherein said corrosion protection composition comprises a condensated and hydrolyzed oligomer and/or polymer of at least one functionalized silane.

### SUMMARY OF INVENTION

### (Technical Problem)

It is desired also for an insulation coating formed on the surface of an electrical steel sheet to have high corrosion resistance and coating adhesion property as with the case of the surface-treatment film on the surface of a zinc or zinc alloy coated steel sheet. In view of the above, the present inventors applied the surface-treatment agent of PTL 2, which makes it possible to achieve high coating adhesion property of a surface-treatment film formed on a zinc or zinc alloy coated steel sheet, to the surface of an electrical steel sheet. The surface-treatment agent was dried to form an insulation coating. The surface-treatment agent have a pH of 8 to 10 and contains a zirconium compound, tetraalkoxysilane, an epoxy-group-containing compound, a chelating agent, a vanadate compound, and a metal compound containing one or more metals selected from the group consisting of Ti, Al, and Zn. As a result, unexpectedly, they found that this surface-treatment agent cannot impart sufficient corrosion resistance and coating adhesion property to the electrical steel sheet. To that end, the present inventors made various studies to find that satisfactory corrosion resistance on an electrical steel sheet can be achieved by using a surface-treatment agent obtained by mixing tetraalkoxysilane and a silane coupling agent in water. Even in this case, however, sufficient coating adhesion property cannot be achieved; besides, punchability is not sufficient. Further, they found that coating film property after annealing (low iron loss) which is a unique property of electrical steel sheets cannot be sufficiently achieved.

In view of the above problems, it is therefore an object of the present invention to provide an electrical steel sheet with an insulation coating, which is excellent in punchability, coating adhesion property, and coating film property after annealing, without any chromium compound being contained in the insulation coating.

### (Solution to Problem)

The inventors made further studies seeking solution to such problem and found that the object can be achieved by using a surface-treatment agent for forming an insulation coating on an electrical steel sheet, which contains as components, trialkoxysilane and/or dialkoxysilane instead of tetraalkoxysilane and a silane coupling agent in addition as a main component. Thus, the present invention has been accomplished.

The present invention is based on the aforementioned findings, and characterized by the features as described below.

A first aspect of the present invention resides in an electrical steel sheet with an insulation coating formed by applying a surface-treatment agent to at least one side of the electrical steel sheet and drying the surface-treatment agent,
wherein the surface-treatment agent contains trialkoxysilane and/or dialkoxysilane (A) in which a substituent bound to Si is constituted only by at least one non-reactive substituent selected from the group consisting of hydrogen, an alkyl group, and a phenyl group; and a silane coupling agent (B), at a mass ratio (A/B) of 0.05 to 1.0; and
plate-like silica (C) having an average particle size of 0.08 µm to 0.9 µm and an aspect ratio of 10 to 100, and the content of the plate-like silica is 2 mass% to 30 mass% with respect to a total solid content of the surface-treatment agent.

A second aspect of the present invention resides in the electrical steel sheet with an insulation coating according to the second aspect, wherein the plate-like silica (C) has an average particle size of 0.1 µm to 0.3 µm and an aspect ratio of 10 to 50.

A third aspect of the present invention resides in the electrical steel sheet with an insulation coating according to any one of the first to third aspects, wherein the surface-treatment agent contains 0.5 mass% to 30 mass% of a lubricant (D) with respect to a total solid content of the surface-treatment agent.

### (Advantageous Effect of Invention)

According to the present invention, trialkoxysilane and/or dialkoxysilane and a silane coupling agent as a main component are used as components of a surface-treatment agent for forming an insulation coating applied to an electrical steel sheet, thereby providing an electrical steel sheet with an insulation coating, which is excellent in punchability, coating adhesion property, and coating film property after annealing that is a unique property of electrical steel sheets, without any chromium compound being contained in the insulation coating.

### DESCRIPTION OF EMBODIMENTS

The invention will be described in further detail below.

### < Electrical steel sheet >

In the present invention, the electrical steel sheet as a starting material is not particularly limited, and any known electrical steel sheets can be suitably used. That is, any of ordinary cold-rolled steel sheets such as so-called soft magnetic sheets (electrical steel sheets) having high magnetic flux density and SPCC, non-oriented electrical steel sheets containing Si and/or Al for increasing specific electrical resistance, and the like are advantageously suitable.

### < Surface-treatment agent >

A surface-treatment agent used in the present invention contains trialkoxysilane and/or dialkoxysilane (A) in which a substituent bound to Si is constituted only by at least one non-reactive substituent selected from the group consisting of hydrogen, an alkyl group, and a phenyl group; a silane coupling agent (B); and water.

The type of trialkoxysilane is not limited in particular. Trialkoxysilane is represented by general formula R1Si (OR')₃, and one or more of trialkoxysilanes represented by the general formula can be used. R1 is a non-reactive substituent selected from the group consisting of hydrogen, an alkyl group, and a phenyl group. When R1 is an alkyl group, the alkyl group is preferably a linear or branched alkyl group having 1 to 6 carbon atoms, more preferably, a linear or branched alkyl group having 1 to 3 carbon atoms. R' is an alkyl group, and the alkyl group is preferably a linear or branched alkyl group having 1 to 4 carbon atoms, more preferably, a linear or branched alkyl group having 1 or 2 carbon atoms. For example, methyltrimethoxysilane, ethyltrimethoxysilane, methyltriethoxysilane, ethyl-triethoxysilane, phenyltriethoxysilane, phenyltrimethoxysilane, hydrolysates thereof, and the like can be used. In particular, trialkoxysilane in which R1 is an alkyl group is preferable in terms of the fact that more excellent corrosion resistance and more excellent punchability of the electrical steel sheet can be achieved.

The type of dialkoxysilane is not limited in particular. Dialkoxysilane is represented by general formula R2R3Si (OR")₂, and one or more of dialkoxysilanes represented by the general formula can be used. Here, R2 and R3 are non-reactive substituents each selected from the group consisting of hydrogen, an alkyl group, and a phenyl group, preferably linear or branched alkyl groups having 1 to 6 carbon atoms, more preferably linear or branched alkyl groups having 1 to 3 carbon atoms. R" is an alkyl group, and the alkyl group is preferably a linear or branched alkyl group having 1 to 4 carbon atoms, more preferably, a linear or branched alkyl group having 1 or 2 carbon atoms. For example, dimethyldimethoxysilane, dimethyldiethoxysilane, diphenyldimethoxysilane, hydrolysates thereof, and the like can be used. In particular, dialkoxysilane in which R2 and R3 are alkyl groups is preferable in terms of the fact that more excellent corrosion resistance and more excellent punchability of the electrical steel sheet can be achieved.

The type of the silane coupling agent (B) is not limited in particular. The silane coupling agent is represented by general formula XSi (R4)ₙ(OR)₃₋ₙ (n here ranges from 0 to 2), and one or more of silane coupling agents represented by the general formula can be used at the same time. X is at least one reactive functional group selected from the group consisting of an active hydrogen-containing amino group, an epoxy group, a mercapto group, and a methacryloxy group. R4 is an alkyl group, and the alkyl group is preferably a linear or branched alkyl group having 1 to 4 carbon atoms, more preferably, a linear or branched alkyl group having 1 or 2 carbon atoms. OR is any given hydrolyzable group, and R is, for example, an alkyl group. The alkyl group is preferably a linear or branched alkyl group having 1 to 4 carbon atoms, more preferably, a linear or branched alkyl group having 1 or 2 carbon atoms. Further, R is, for example, an acyl group (-COR5), and R5 is preferably a linear or branched alkyl group having 1 to 4 carbon atoms, more preferably, a linear or branched alkyl group having 1 or 2 carbon atoms. Examples of the silane coupling agent (B) include N-(aminoethyl)-3-aminopropyltrimethoxysilane, 3-aminopropyltrimethoxysilane, 3-glycidoxypropyltrimethoxysilane, 3-glycidoxypropylmethyl-dimethoxysilane, 2-(3,4-epoxycyclohexyl)-ethyltriethoxysilane, vinyltriethoxysilane, 3-mercaptopropyltrimethoxysilane, and hydrolysates thereof. In particular, a silane coupling agent having an amino group or an epoxy group is preferable in terms of the fact that more excellent corrosion resistance and more excellent punchability of the electrical steel sheet can be achieved.

The surface-treatment agent used in the present invention is characterized by containing trialkoxysilane and/or dialkoxysilane (A) instead of tetraalkoxysilane. As described above, when the surface-treatment agent applied to the electrical steel sheet contains tetraalkoxysilane, sufficient coating adhesion property cannot be achieved and higher iron loss is caused after annealing. Thus, sufficient coating film property after annealing cannot be achieved. However, when the insulation coating is formed using a surface-treatment agent containing trialkoxysilane and/or dialkoxysilane (A); surprisingly, sufficient coating adhesion property of the insulation coating to the surface of the electrical steel sheet can be achieved, and besides, iron loss after stress relief annealing can be further suppressed.

It is assumed that insufficient corrosion resistance and coating adhesion property on an electrical steel sheet are caused by the surface-treatment agent disclosed in PTL 2 for the reasons as follows. It has been found that vanadic acid compound is concentrated in particular at the interface between zinc and the coating, on a zinc or zinc alloy coated steel sheet. Accordingly, it is assumed that zinc dissolves due to acid and then a reaction product is formed at the interface. With respect to an electrical steel sheet, since an oxide film of Si and/or Al is formed on the surface of the steel sheet, reaction between the steel and the vanadic acid compound does not occur. Accordingly, an excessive vanadic acid compound remains in the coating, which would results in insufficient corrosion resistance. As a method for improving corrosion resistance of an electrical steel sheet, a film of oxide such as silica and/or alumina may be removed using a chemical solution having increased reactivity. However, this method would cause generation of rust due to nonuniform removal of the oxide film and/or excessive dissolution of iron under the oxide film. As a result of various investigations for solving this problem, the inventors found that satisfactory corrosion resistance can be achieved by forming an insulation coating using a surface-treatment agent of the present invention with an oxide film being remained on the surface of a steel sheet.

Another feature of the surface-treatment agent used in the present invention is that the mass ratio (A/B) of trialkoxysilane and/or dialkoxysilane (A) to the silane coupling agent (B) is in the range of 0.05 to 1.0. When the mass ratio is more than 1.0, the amount of the silane coupling agent (B) is insufficient, so that sufficient toughness of the insulation coating cannot be achieved. Consequently, sufficient punchability cannot be achieved, and besides, tension pad resistance is easily degraded and damage and/or peeling of the coating due to handling are easily caused. Thus, the present invention can significantly improve punchability and tension pad resistance by not only using trialkoxysilane and/or dialkoxysilane (A) but also a silane coupling agent (B) as a main component. When the mass ratio is less than 0.05, TIG weldability is reduced. In these respects, the mass ratio (A/B) is determined to be in the range of 0.05 to 1.0, and preferably, the mass ratio is in the range of 0.1 to 0.5.

The surface-treatment agent used in the present invention contains plate-like silica (C). The plate-like silica is also referred to as leaf silica or scaly silica, which has a layered silicate structure in which a number of thin layers of SiO₂ are stacked. Such plate-like silica is preferably amorphous or microcrystalline. The plate-like silica can be obtained by preparing agglomerated particles of stacked primary particles of the thin layers, and pulverizing these agglomerated particles. Such plate-like silica can inhibit permeation of corrosion substances due to the layered form; is more excellent in adhesion property due to the presence of many hydroxyl groups; and is excellent in slidability due to the flexibility as compared with common silica particles, for example, colloidal silica and the like. In general, inorganic components such as colloidal silica adversely affect punchability. Meanwhile, plate-like silica was found to hardly deteriorate punchability. This is considered because plate-like silica formed of thin layers of SiO₂ easily slides between layers and easily deforms during punching. Further, the content of inorganic components in the surface-treatment agent is increased to lower the ratio of the components to be vaporized in TIG welding. Furthermore, the coating adhesion property is improved, so that a coating is formed to fit the unevenness of the steel sheet surface, which results in gaps between the sheets. Accordingly, loopholes for vaporized gas are ensured. Thus, TIG weldability can be improved. Further, when a surface-treatment agent containing the plate-like silica is applied, the surface-treatment agent can be uniformly applied on the unevenness of the steel sheet surface, since the surface-treatment agent remains even on projections on the steel sheet surface which are generally likely to be coated with less agent. Thus, the thickness of the insulation coating after annealing can be uniform; the corrosion resistance is not deteriorated in spite of degradation and loss of organic components due to annealing; and the risk of iron loss after annealing due to insulation failure between electrical steel sheets can be eliminated.

The average particle size of plate-like silica (C) is in the range of 0.08 µm to 0.9 µm and the aspect ratio is in the range of 10 to 100. Preferably, the average particle size is approximately 0.1 µm to 0.5 µm, and the aspect ratio is about 20 to 90. In cases where the particle size of the plate-like silica (C) is 0.08 µm or more and the aspect ratio is 10 or more, the form of coating is positively affected, and the sufficient uniformed coating does not affect sticking property and TIG weldability. When the particle size is 0.9 µm or less and the aspect ratio is 100 or less, trialkoxysilane and/or dialkoxysilane (A) and a silane coupling agent (B) are sufficiently introduced into the coating, which results in sufficient tension pad resistance. The term "tension pad resistance" here refers to the resistance of the coating to peeling caused when the steel sheet is rubbed with a felt tension pad used to support a sheet for slitting a coil and the like.

The plate-like silica (C) having an average particle size of 0.1 µm to 0.3 µm and an aspect ratio of 10 to 50 has excellent punchability, which is more preferable. When the average particle size is 0.1 µm or more, less pulverization of plate-like silica due to punching would be caused. Accordingly, less powders are generated, so that a metal mold is not stained. Thus, excellent punchability is achieved. The larger the average particle size of the plate-like silica is, the more the metal mold is likely to be worn in punching. When the average particle size is 0.3 µm or less, the wear of the metal mold is negligible, which results in excellent punchability. Further, when the aspect ratio is 10 to 50, the plate-like silica is easily deformed in punching as described above, which results in particularly excellent punchability. When the aspect ratio is 50 or less, a uniform coating fitting the unevenness of the steel sheet surface can be more easily formed; thus, the resultant steel sheet has excellent corrosion resistance and favorably low iron loss after annealing.

The term "average particle size" of plate-like silica herein means the average length of the major axis on a plane perpendicular to the thickness of a plurality of particles of the plate-like silica in the field observed by SEM (Scanning Electron Microscope).

The term "aspect ratio" of plate-like silica herein means the average ratio of the major axis on a plane perpendicular to the thickness to the maximum thickness of 10 plate-like silica particles in the field observed by SEM.

The content of plate-like silica (C) is in the range of 2 mass% to 30 mass% with respect to the total solid content of a surface-treatment agent, more preferably, 20 mass% or less. When the content is 2 mass% or more, an electrical steel sheet excellent in sticking property and TIG weldability can be obtained. Meanwhile, when the content is 30 mass% or less, the corrosion resistance and tension pad resistance are not deteriorated.

A lubricant (D) may be added to the surface-treatment agent used in the present invention thereby improving punchability and tension pad resistance. Examples of the lubricant (D) may include a solid lubricant such as polyethylene wax, oxidized polyethylene wax, oxidized polypropylene wax, carnauba wax, paraffin wax, montan wax, a rice wax, a Teflon^{®} wax, carbon disulfide, and graphite. Alternatively, a nonionic acrylic resin may be used as the lubricant (D). Examples of the nonionic acrylic resin include, for example, an acrylic resin emulsified with a nonionic emulsifying agent may be used. The nonionic acrylic resin may be, for example, an aqueous emulsion obtained by emulsion polymerization of a vinyl monomer such as acrylic acid, methacrylic acid, acrylate, methacrylate, or styrene in water in the presence of a nonionic surfactant (emulsifying agent) having a polyethylene oxide or polypropylene oxide in the structure. At least one of the aforementioned solid lubricants can be used.

The content of the lubricant (D) used in the present invention is preferably in the range of 0.5 mass% to 30 mass% with respect to the total solid content of the surface-treatment agent, more preferably, 2 mass% to 15 mass%. When the content is 0.5 mass% or more, sufficient improvement in punchability and tension pad resistance can be achieved; meanwhile, a content of 30 mass% or less would not cause poor TIG weldability.

The surface-treatment agent can be obtained by mixing the above-mentioned components in water such as deionized water or distilled water. The ratio of solid content in the surface-treatment agent may be appropriately determined. Further, alcohol; ketone; water-soluble solvent based on cellosolve; a surfactant; a defoamer; a leveling agent; a pH adjuster; an antibacterial and antifungal agent; and the like may be added to the surface-treatment agent as necessary. Addition of these materials improves drying properties, coating appearance, workability, and design performance of the surface-treatment agent. However, it is important that these additives are added to such an extent that addition thereof does not adversely affect qualities to be obtained in the present invention. The maximum amount of these additives to be added is to be less than 5 mass% with respect to the total solid content of the surface-treatment agent.

As mentioned above, a surface-treatment agent is applied to the surface of an electrical steel sheet and is heat-dried to form an insulation coating in the present invention. Examples of a method of applying the surface-treatment agent to an electrical steel sheet include roll coating, bar coating, dip coating, spray coating, and the like. An appropriate method may be selected depending on the shape or the like of the electrical steel sheet to be processed. More specifically, for example, when an electrical steel sheet is in a sheet form, roll coating, bar coating, or spray coating may be selected. Spray coating is a method in which the surface-treatment agent is sprayed onto the electrical steel sheet and then the coating amount may be adjusted by a squeeze roll or gas blown at high pressure. In a case where the electrical sheet has already been shaped into a product, a method may be employed in which the product is dipped in the surface-treatment agent, taken out of the agent, and in some cases the coating amount is adjusted by blowing away an excess surface-treatment agent with compressed air.

The heating temperature (maximum end-point temperature of the steel sheet) for heat-drying the surface-treatment agent applied to the surface of the electrical steel sheet is generally in the range of 80 °C to 350 °C, preferably in the range of 100 °C to 300 °C. When the heating temperature is equal to or higher than 80 °C, no moisture, serving as main solvent, remains in the coating. When the heating temperature is equal to or lower than 350 °C, the generation of cracks in the coating can be suppressed. Accordingly, problems such as deterioration in corrosion resistance of the electrical steel sheet can be prevented from arising by setting the heating temperature within the aforementioned range. The heating time may be selected depending on the type or the like of an electrical steel sheet to be used. The heating time is set preferably in the range of 0.1 to 60 seconds, more preferably in the range of 1 to 30 seconds, in terms of productivity or the like.

Strain on the electrical steel sheet with an insulation coating due to punching can be removed, for example, by subjecting the steel sheet to stress relief annealing. As a preferable stress relief annealing atmosphere, an atmosphere hardly oxidizing iron, such as N₂ atmosphere or DX gas atmosphere is applied. Here, the corrosion resistance can be further improved by setting a high dew point, for example, Dp: about 5 °C to 60 °C to slightly oxidize the surface and the cut end surfaces. Also, the stress relief annealing temperature is preferably 700 °C to 900 °C, more preferably 700 °C to 800 °C. The holding time of the stress relief annealing temperature is preferably longer, and for example not shorter than two hours.

The amount of the coating attached to the electrical steel sheet is not particularly limited, but is preferably about 0.05 g/m² to 5 g/m² per side. The coating amount or the total solid content mass of the insulation coating according to the present invention can be measured from the reduction in weight after the removal of the coating through dissolution with alkali. If the coating amount is small, it can be determined from a calibration curve obtained by fluorescent X-ray analysis using a standard sample having a coating amount previously measured by means of alkali dissolution. When the coating amount is 0.05 g/m² or more, the insulation property can be satisfied as well as the corrosion resistance. Meanwhile, when it is 5 g/m² or less, not only the coating adhesion property is improved, but also blistering is not caused in the coat baking, and the deterioration of coatability is not incurred. More preferably, it is 0.1 g/m² to 3.0 g/m². Although it is preferable to form insulation coatings on the both surfaces of a steel sheet, the coating may be formed on only one surface and another type of insulation coating may be formed on the other surface depending on the purpose.

The present invention will be described below in more detail using the examples below.

### EXAMPLES

### (1) Material

Electrical steel sheets [A230 (JIS C 2552(2000))] having a sheet thickness of 0.5 mm were used as test pieces.

### (2) Surface-treatment agent

Components of respective compositions (mass ratios) shown in Table 1 were mixed in water to obtain respective surface-treatment agents.

### (3) Treatment method

After performing annealing for achieving the desired steel quality using a continuous annealing line, each surface-treatment agent was applied by roll coating in a stage where each steel sheet was cooled, and drying was performed using an oven such that the maximum end-point temperature of the steel sheet was 140 °C, thereby forming insulation coatings with the coating amount of 600 mg/m² on the both sides of each steel sheet. As a condition of roll coating, a full reverse 3-roll coater system was used. The drying temperature corresponds to the end-point temperature of the surface of each test sheet.

Next, the compounds used in Table 1 will be described.

### < Trialkoxysilane / Dialkoxysilane / Tetraalkoxysilane >

- A1:: Methyltrimethoxysilane
- A2:: Methyltriethoxysilane
- A3:: Dimethyldimethoxysilane
- A4:: Phenyltrimethoxysilane
- A5:: Tetramethoxysilane (Comparative example)
- A6:: Tetraethoxysilane (Comparative example)

### < Silane Coupling Agent >

- B1:: 3-Glycidoxypropyltrimethoxysilane
- B2:: N-(2-aminoethyl)-3-aminopropyltrimethoxysilane
- B3:: 3-Methacryloxypropylmethyldimethoxysilane
- B4:: 3-Mercaptopropyltrimethoxysilane

### < Plate-like silica >

- C1:: Average particle size: 0.2 µm, Aspect ratio: 20
- C2:: Average particle size: 0.1 µm, Aspect ratio: 10
- C3:: Average particle size: 0.5 µm, Aspect ratio: 50
- C4:: Average particle size: 1.0 µm, Aspect ratio: 50
- C5:: Average particle size: 0.08 µm, Aspect ratio: 10
- C6:: Average particle size: 0.1 µm, Aspect ratio: 20
- C7:: Average particle size: 0.15 µm, Aspect ratio: 20

- C8:: Average particle size: 0.3 µm, Aspect ratio: 30
- C9:: Average particle size: 0.3 µm, Aspect ratio: 50
- C10:: Average particle size: 0.3 µm, Aspect ratio: 80
- C11:: Average particle size: 0.5 µm, Aspect ratio: 30

### < Lubricant >

- D1:: Polyethylene wax (CHEMIPEARL^{®}900)
- D2:: Styrene-ethylmethacrylate-n-butylacrylate-acrylic acid copolymer

### (Evaluation method)

### (1) Coating adhesion property

Steel sheets with cellophane adhesive tape being attached were bent at 180° using a round bar having a diameter of 5 mm such that the test surfaces compress, and then the cellophane adhesive tape was peeled off to measure the amount of peeled coating by X-ray fluorescence analysis. The X-ray fluorescence intensities of Si in the coating before the 180° bending and in the peeled cellophane adhesive tape were measured, the ratio of the intensity of Si in each cellophane adhesive tape to the intensity of Si in each coating before the 180° bending was evaluated.

### (Criteria)

+ + : No peeling (no removal)
+ : More than 0 % and less than or equal to 10 %
- : More than 10 % and less than or equal to 20 %
- - : More than 20 %

### (2) Punchability

The test pieces were each subjected to punching using a 15 mmφ steel dice, repeated until the burr height reaches to 50 µm, and the punchability was evaluated with the number of punchings (times).

### (Criteria)

+ + : Equal to or more than 1,200,000 times
+ : 1,000,000 times or more and less than 1,200,000 times
+' : 700,000 times or more and less than 1,000,000 times
- : 300,000 times or more and less than 700,000 times
- - : Less than 300,000 times

### (3) Iron loss measurement after stress relief annealing

Five test pieces punched into 50 mm x 300 mm were stacked. The central portions of 50 mm x 50 mm in the test pieces were clamped at a pressure of 9.8 MPa (100 Kgf/cm²) by bolting. The test pieces were maintained in this state in N₂ atmosphere at 750 °C for 2 hours, and then cooled to room temperature. The iron loss (W15/50) at that time and the iron loss of the 5 steel sheets having been once disassembled and then stacked again were measured, and the iron loss after stress relief annealing was evaluated with the difference (between the iron loss after annealing and the iron loss after the disassembling and restacking).

### (Criteria)

Iron loss difference
+ + : Equal to or less than 0.5 W/Kg
+ : More than 0.5 W/Kg and equal to or less than 1.2 W/Kg
- : More than 1.2 W/Kg and less than 2.0 W/Kg
- - : Equal to or more than 2.0 W/Kg

### (4) TIG weldability

The test pieces were stacked under a pressure of 9.8 MPa (100 kgf/cm²) so as to have a thickness of 30 mm, and end face portions thereof (length 30 mm) were subjected to TIG welding under the following conditions:
- Welding current: 120A
- Ar gas flow rate: 6 litre/min
- Welding speed: 10, 20, 30, 40, 50, 60, 70, 80, 90, 100 cm/min

### (Criteria)

Relative merits were judged by the welding speed satisfying the number of blowholes of not more than 5 per bead.
+ + : Equal to or more than 60 cm/min
+ : Equal to or more than 40 cm/min and less than 60 cm/min
- : Equal to or more than 20 cm/min and less than 40 cm/min
- - : Less than 20 cm/min

### (5) Corrosion resistance

Two test pieces punched into 50 mm x 50 mm were stacked, and a 200 g weight was put thereon. Then, the test pieces were left in a constant temperature and humidity bath at a temperature of 50 °C and at a relative humidity of 80 % for 2 weeks. The average ratio of the rust area on the two surfaces of the stacked test pieces were measured by visual observation.

### (Criteria)

++ : 0 %
+ : More than 0 % and less than 2 %
- : Equal to or more than 2 % and less than 5 %
- - : Equal to or more than 5 %

### (6) Tension pad resistance

The surfaces of the insulation coatings were rubbed back and forth 100 times with a load of 24.5 N (2.5 kgf) being applied using a tension pad, manufactured by Taihei Rika Kogyo Co., Ltd., having an area of 10 mm x 10 mm. The coating amount of each rubbed portion and the vicinity thereof was measured to calculate the residual ratio of each insulation coatings after the 100 reciprocal rubbings. The coating amount was determined from the calibration curve obtained by X-ray fluorescence analysis of Si using a standard sample sheet having a known coating amount.

### (Criteria)

++ : Equal to or more than 90 %
+ : Equal to or more than 80 % and less than 90 %
- : Equal to or more than 60 % and less than 80 %
- - : Less than 60 %

The results of the foregoing evaluations with respect to the electrical steel sheets with insulation coatings obtained using respective surface-treatment agents described in examples and comparative examples are shown in Table 1.

### [Table 1-1] Nos. 1 to 40 (without marginal notes)

**Table 1-1**

| Test standard | | Surface-treatment agent | | | | | | | Properties | | | | | |
|---|---|---|---|---|---|---|---|---|---|---|---|---|---|---|
| | | A | B | C | D | A/B | C | D | Coating adhesion property | Punchability | Iron loss | TIG welding | Corrosion resistance | Tension pad resistance |
| | | Type | Type | Type | Type | Mass ratio | Mass (%) | Mass (%) | | | | | | |
| Comparative example | 1 | A1 | B1 | - | - | 0.03 | - | - | + | + | + | - | + | + |
| Example | 2 | A1 | B1 | - | - | 0.05 | - | - | + | + | + | + | + | + |
| Example | 3 | A1 | B1 | - | - | 0.11 | - | - | + | ++ | + | + | + | + |
| Example | 4 | A1 | B1 | - | - | 0.43 | - | - | ++ | ++ | + | + | + | + |
| Example | 5 | A1 | B1 | - | - | 1.00 | - | - | + | + | + | + | + | + |
| Comparative example | 6 | A1 | B1 | - | - | 1.50 | - | - | + | - | + | ++ | + | - |
| Comparative example | 7 | A1 | B1 | - | - | 2.00 | - | - | - | - | + | ++ | + | - |
| Comparative example | 8 | A1 | B2 | - | - | 0.03 | - | - | + | + | + | - | + | + |
| Example | 9 | A1 | B2 | - | - | 0.05 | - | - | + | + | + | + | + | + |
| Example | 10 | A1 | B2 | - | - | 0.30 | - | - | + | ++ | + | + | + | + |
| Example | 11 | A1 | B2 | - | - | 1.00 | - | - | + | + | + | + | + | + |
| Comparative example | 12 | A1 | B2 | - | - | 1.50 | - | - | + | - | + | ++ | + | - |
| Comparative example | 13 | A1 | B3 | - | - | 0.03 | - | - | + | + | + | - | + | + |
| Example | 14 | A1 | B3 | - | - | 0.05 | - | - | + | + | + | + | + | + |
| Example | 15 | A1 | B3 | - | - | 0.30 | - | - | + | ++ | + | + | + | + |
| Example | 16 | A1 | B3 | - | - | 1.00 | - | - | + | + | + | + | + | + |
| Comparative example | 17 | A1 | B3 | - | - | 1.50 | - | - | + | - | + | ++ | + | - |
| Comparative example | 18 | A1 | B4 | - | - | 0.03 | - | - | + | + | + | - | + | + |
| Example | 19 | A1 | B4 | - | - | 0.05 | - | - | + | + | + | + | + | + |
| Example | 20 | A1 | B4 | - | - | 0.30 | - | - | + | ++ | + | + | + | + |
| Example | 21 | A1 | B4 | - | - | 1.00 | - | - | + | + | + | + | + | + |
| Comparative example | 22 | A1 | B4 | - | - | 1.50 | - | - | + | - | + | + | + | - |
| Comparative example | 23 | A2 | B1 | - | - | 0.03 | - | - | + | + | + | - | + | + |
| Example | 24 | A2 | B1 | - | - | 0.05 | - | - | + | + | + | + | + | + |
| Example | 25 | A2 | B1 | - | - | 0.30 | - | - | + | ++ | + | + | + | + |
| Example | 26 | A2 | B1 | - | - | 1.00 | - | - | + | + | + | + | + | + |
| Comparative example | 27 | A2 | B1 | - | - | 1.50 | - | - | + | - | + | + | + | - |
| Comparative example | 28 | A2 | B2 | - | - | 0.03 | - | - | + | + | + | - | + | + |
| Example | 29 | A2 | B2 | - | - | 0.05 | - | - | + | + | + | + | + | + |
| Example | 30 | A2 | B2 | - | - | 0.30 | - | - | + | ++ | + | + | + | + |
| Example | 31 | A2 | B2 | - | - | 1.00 | - | - | + | + | - | + | + | + |
| Comparative example | 32 | A2 | B2 | - | - | 1.50 | - | - | + | - | + | + | + | - |
| Comparative example | 33 | A2 | B3 | - | - | 0.03 | - | - | + | + | + | - | + | + |
| Example | 34 | A2 | B3 | - | - | 0.05 | - | - | + | + | + | + | + | + |
| Example | 35 | A2 | B3 | - | - | 0.30 | - | - | + | ++ | + | + | + | + |
| Example | 36 | A2 | B3 | - | - | 1.00 | - | - | + | + | + | + | + | + |
| Comparative example | 37 | A2 | B3 | - | - | 1.50 | - | - | + | - | + | + | + | - |
| Comparative example | 38 | A2 | B4 | - | - | 0.03 | - | - | + | + | + | - | + | + |
| Example | 39 | A2 | B4 | - | - | 0.05 | - | - | + | + | + | + | + | + |
| Example | 40 | A2 | B4 | - | - | 0.30 | - | - | + | ++ | + | + | + | + |

### [Table 1-2] Nos. 41 to 89 (without marginal notes)

**Table 1-2**

| Test standard | | Surface-treatment agent | | | | | | | Properties | | | | | |
|---|---|---|---|---|---|---|---|---|---|---|---|---|---|---|
| | | A | B | C | D | A/B | C | D | Coating adhesion property | Punchability | Iron loss | TIG welding | Corrosion resistance | Tension pad resistance |
| | | Type | Type | Type | Type | Mass ratio | Mass (%) | Mass (%) | | | | | | |
| Example | 41 | A2 | B4 | - | - | 1.00 | - | - | + | + | + | + | + | + |
| Comparative example | 42 | A2 | B4 | - | - | 1.50 | - | - | + | - | + | + | + | - |
| Comparative example | 43 | A3 | B1 | - | - | 0.03 | - | - | + | + | + | - | + | + |
| Example | 44 | A3 | B1 | - | - | 0.05 | - | - | + | + | + | + | + | + |
| Example | 45 | A3 | B1 | - | - | 0.30 | - | - | + | ++ | + | + | + | + |
| Example | 46 | A3 | B1 | - | - | 1.00 | - | - | + | + | + | + | + | + |
| Comparative example | 47 | A3 | B1 | - | - | 1.50 | - | - | + | - | + | + | + | - |
| Comparative example | 48 | A3 | B2 | - | - | 0.03 | - | - | + | + | + | - | + | + |
| Example | 49 | A3 | B2 | - | - | 0.05 | - | - | + | + | + | + | + | + |
| Example | 50 | A3 | B2 | - | - | 0.30 | - | - | + | ++ | + | + | + | + |
| Example | 51 | A3 | B2 | - | - | 1.00 | - | - | + | + | + | + | + | + |
| Comparative example | 52 | A3 | B2 | - | - | 1.50 | - | - | + | - | + | + | + | - |
| Comparative example | 53 | A3 | B3 | - | - | 0.03 | - | - | + | + | + | - | + | + |
| Example | 54 | A3 | B3 | - | - | 0.05 | - | - | + | + | + | + | + | + |
| Example | 55 | A3 | B3 | - | - | 0.30 | - | - | + | ++ | + | + | + | + |
| Example | 56 | A3 | B3 | - | - | 1.00 | - | - | + | + | + | + | + | + |
| Comparative example | 57 | A3 | B3 | - | - | 1.50 | - | - | + | - | + | + | + | - |
| Comparative example | 58 | A3 | B4 | - | - | 0.03 | - | - | + | + | + | - | + | + |
| Example | 59 | A3 | B4 | - | - | 0.05 | - | - | + | + | + | + | + | + |
| Example | 60 | A3 | B4 | - | - | 0.30 | - | - | + | ++ | + | + | + | + |
| Example | 61 | A3 | B4 | - | - | 1.00 | - | - | + | + | + | + | + | + |
| Comparative example | 62 | A3 | B4 | - | - | 1.50 | - | - | + | - | + | + | + | - |
| Comparative example | 63 | A4 | B1 | - | - | 0.03 | - | - | + | + | + | - | + | + |
| Example | 64 | A4 | B1 | - | - | 0.05 | - | - | + | + | + | + | + | + |
| Example | 65 | A4 | B1 | - | - | 0.30 | - | - | + | ++ | + | + | + | + |
| Example | 66 | A4 | B1 | - | - | 1.00 | - | - | + | + | + | + | + | + |
| Comparative example | 67 | A4 | B1 | - | - | 1.50 | - | - | + | - | + | + | + | - |
| Comparative example | 68 | A4 | B2 | - | - | 0.03 | - | - | + | + | + | - | + | + |
| Example | 69 | A4 | B2 | - | - | 0.05 | - | - | + | + | + | + | + | + |
| Example | 70 | A4 | B2 | - | - | 0.30 | - | - | + | ++ | + | + | + | + |
| Example | 71 | A4 | B2 | - | - | 1.00 | - | - | + | + | + | + | + | + |
| Comparative example | 72 | A4 | B2 | - | - | 1.50 | - | - | + | - | + | + | + | - |
| Comparative example | 73 | A4 | B3 | - | - | 0.03 | - | - | + | + | + | - | + | + |
| Example | 74 | A4 | B3 | - | - | 0.05 | - | - | + | + | + | + | + | + |
| Example | 75 | A4 | B3 | - | - | 0.30 | - | - | + | ++ | + | + | + | + |
| Example | 76 | A4 | B3 | - | - | 1.00 | - | - | + | + | + | + | + | + |
| Comparative example | 77 | A4 | B3 | - | - | 1.50 | - | - | + | - | + | + | + | - |
| Comparative example | 78 | A4 | B4 | - | - | 0.03 | - | - | + | + | + | - | + | + |
| Example | 79 | A4 | B4 | - | - | 0.05 | - | - | + | + | + | + | + | + |
| Example | 80 | A4 | B4 | - | - | 0.30 | - | - | + | ++ | + | + | + | + |

### [Table 1-3] Nos. 81 to 120 (without a marginal note)

**Table 1-3**

| Test standard | | Surface-treatment agent | | | | | | | Properties | | | | | |
|---|---|---|---|---|---|---|---|---|---|---|---|---|---|---|
| | | A | B | C | D | A/B | C | D | Coating adhesion property | Punchability | Iron loss | TIG welding | Corrosion resistance | Tension pad resistance |
| | | Type | Type | Type | Type | Mass ratio | Mass (%) | Mass (%) | | | | | | |
| Example | 81 | A4 | B4 | - | - | 1.00 | - | - | + | + | + | + | + | + |
| Comparative example | 82 | A4 | B4 | - | - | 1.50 | - | - | + | - | + | + | + | - |
| Comparative example | 83 | A5 | B1 | - | - | 0.30 | - | - | - | - | - | + | + | + |
| Comparative example | 84 | A5 | B2 | - | - | 0.30 | - | - | - | - | - | + | + | + |
| Comparative example | 85 | A5 | B3 | - | - | 0.30 | - | - | - | - | - | + | + | + |
| Comparative example | 86 | A5 | B4 | - | - | 0.30 | - | - | - | - | - | + | + | + |
| Comparative example | 87 | A6 | B1 | - | - | 0.30 | - | - | - | - | - | + | + | + |
| Comparative example | 88 | A6 | B2 | - | - | 0.30 | - | - | - | - | - | + | + | + |
| Comparative example | 89 | A6 | B3 | - | - | 0.30 | - | - | - | - | - | + | + | + |
| Comparative example | 90 | A6 | B4 | - | - | 0.30 | - | - | - | - | - | + | + | + |
| Comparative example | 91 | A1+A2 | B1 | - | - | 0.03 | - | - | + | + | + | - | + | + |
| Example | 92 | A1+A2 | B1 | - | - | 0.05 | - | | + | + | + | + | + | + |
| Example | 93 | A1+A2 | B1 | - | - | 0.30 | - | - | + | ++ | + | + | + | + |
| Example | 94 | A1+A2 | B1 | - | - | 1.00 | - | - | + | + | + | + | + | + |
| Comparative example | 95 | A1+A2 | B1 | - | - | 1.50 | - | - | + | - | + | + | + | - |
| Comparative example | 96 | A1+A3 | B1 | - | - | 0.03 | - | - | + | + | + | - | + | + |
| Example | 97 | A1+A3 | B1 | - | - | 0.05 | - | - | + | + | + | + | + | + |
| Example | 98 | A1+A3 | B1 | - | - | 0.30 | - | - | + | ++ | + | + | + | + |
| Example | 99 | A1+A3 | B1 | - | - | 1.00 | - | - | + | + | + | + | + | + |
| Comparative example | 100 | A1+A3 | B1 | - | - | 1.50 | - | - | + | - | + | + | + | - |
| Comparative example | 101 | A1+A4 | B1 | - | - | 0.03 | - | - | + | + | + | - | + | + |
| Example | 102 | A1+A4 | B1 | - | - | 0.05 | - | - | + | + | + | + | + | + |
| Example | 103 | A1+A4 | B1 | - | - | 0.30 | - | - | + | ++ | + | + | + | + |
| Example | 104 | A1+A4 | B1 | - | - | 1.00 | - | - | + | + | + | + | + | + |
| Comparative example | 105 | A1+A4 | B1 | - | - | 1.50 | - | - | + | - | + | + | + | - |
| Comparative example | 106 | A1 | B1+B2 | - | - | 0.03 | - | - | + | + | + | - | + | + |
| Example | 107 | A1 | B1+B2 | - | - | 0.05 | - | - | + | + | + | + | + | + |
| Example | 108 | A1 | B1+B2 | - | - | 0.30 | - | - | + | ++ | + | + | + | + |
| Example | 109 | A1 | B1+B2 | - | - | 1.00 | - | - | + | + | + | + | + | + |
| Comparative example | 110 | A1 | B1+B2 | - | - | 1.50 | - | - | + | - | + | + | + | - |
| Comparative example | 111 | A1 | B1+B3 | - | - | 0.03 | - | - | + | + | + | - | + | + |
| Example | 112 | A1 | B1+B3 | - | - | 0.05 | - | - | + | + | + | + | + | + |
| Example | 113 | A1 | B1+B3 | - | - | 0.30 | - | - | + | ++ | + | + | + | + |
| Example | 114 | A1 | B1+B3 | - | - | 1.00 | - | - | + | + | + | + | + | + |
| Comparative example | 115 | A1 | B1+B3 | - | - | 1.50 | - | - | + | - | + | + | + | - |
| Comparative example | 116 | A1 | B1+B4 | - | - | 0.03 | - | - | + | + | + | - | + | + |
| Example | 117 | A1 | B1+B4 | - | - | 0.05 | - | - | + | + | + | + | + | + |
| Example | 118 | A1 | BI+B4 | - | - | 0.30 | - | - | + | ++ | + | + | + | + |
| Example | 119 | A1 | B1+B4 | - | - | 1.00 | - | | + | + | + | + | + | + |
| Comparative example | 120 | A1 | B1+B4 | - | - | 1.50 | - | - | + | - | + | + | + | - |
| | | *The ratio between two compounds when used in A or B is 1:1. | | | | | | | | | | | | |

### [Table 1-4] Nos. 121 to 158 (without a marginal note)

**Table 1-4**

| Test standard | | Surface-treatment agent | | | | | | | Properties | | | | | |
|---|---|---|---|---|---|---|---|---|---|---|---|---|---|---|
| | | A | B | C | D | A/B | C | D | Coating adhesion | Punchability | Iron loss | TIG welding | Corrosion resistance | Tension pad resistance |
| | | Type | Type | Type | Type | Mass ratio | (%) | Mass (%) | | | | | | |
| Comparative Example | 121 | A1 | B1 | C1 | - | 0.25 | 1.0 | - | + | + | + | + | + | + |
| Example | 122 | A1 | B1 | C1 | - | 0.25 | 2.0 | - | + | + | ++ | ++ | ++ | ++ |
| Example | 123 | A1 | B1 | C1 | - | 0.25 | 5.0 | - | + | + | ++ | ++ | ++ | ++ |
| Example | 124 | A1 | B1 | C1 | - | 0.25 | 10.0 | - | + | + | ++ | ++ | ++ | ++ |
| Example | 125 | A1 | B1 | C1 | - | 0.25 | 20.0 | - | + | + | ++ | ++ | ++ | ++ |
| Example | 126 | A1 | B1 | C1 | - | 0.25 | 30.0 | - | + | + | ++ | ++ | ++ | ++ |
| Comparative Example | 127 | A1 | B1 | C1 | - | 0.25 | 35.0 | - | + | + | ++ | ++ | + | + |
| Example | 128 | A1 | B1 | C2 | - | 0.25 | 1.0 | - | + | + | + | + | + | + |
| Example | 129 | A1 | B1 | C2 | - | 0.25 | 2.0 | - | + | + | + | + | ++ | ++ |
| Example | 130 | A1 | B1 | C2 | - | 0.25 | 5.0 | - | + | + | ++ | ++ | ++ | ++ |
| Example | 131 | A1 | B1 | C2 | - | 0.25 | 20.0 | - | + | + | ++ | ++ | ++ | ++ |
| Example | 132 | A1 | B1 | C3 | - | 0.25 | 1.0 | - | + | +' | + | + | + | + |
| Example | 133 | A1 | B1 | C3 | - | 0.25 | 2.0 | - | + | +' | ++ | ++ | ++ | ++ |
| Example | 134 | A1 | B1 | C3 | - | 0.25 | 5.0 | - | + | +' | ++ | ++ | ++ | ++ |
| Example | 135 | A1 | B1 | C3 | - | 0.25 | 10.0 | - | + | +' | ++ | ++ | ++ | ++ |
| Example | 136 | A1 | B1 | C3 | - | 0.25 | 20.0 | - | + | +' | ++ | ++ | ++ | ++ |
| Comparative Example | 137 | A1 | B1 | C4 | - | 0.25 | 10.0 | - | + | +' | ++ | ++ | ++ | ++ |
| Example | 138 | A1 | B1 | C5 | - | 0.25 | 10.0 | - | + | + | ++ | ++ | ++ | ++ |
| Example | 139 | A1 | B1 | C6 | - | 0.25 | 10.0 | - | + | + | ++ | ++ | ++ | ++ |
| Example | 140 | A1 | B1 | C7 | - | 0.25 | 10.0 | - | + | + | ++ | ++ | ++ | ++ |
| Example | 141 | A1 | B1 | C8 | - | 0.25 | 10.0 | - | + | + | ++ | ++ | ++ | ++ |
| Example | 142 | A1 | B1 | C9 | - | 0.25 | 10.0 | - | + | + | ++ | ++ | ++ | ++ |
| Example | 143 | A1 | B1 | C10 | - | 0.25 | 10.0 | - | + | +' | + | ++ | + | ++ |
| Example | 144 | A1 | B1 | C11 | - | 0.25 | 10.0 | - | + | +' | ++ | ++ | ++ | ++ |
| Example | 145 | A2 | B1 | C1 | - | 0.25 | 10.0 | - | + | + | ++ | ++ | ++ | ++ |
| Example | 146 | A1 | B2 | C1 | - | 0.25 | 10.0 | - | + | + | ++ | ++ | ++ | ++ |
| Comparative example | 147 | A1 | B1 | C1 | - | 2.00 | 10.0 | - | - | -- | ++ | ++ | ++ | - |
| Example | 148 | A1 | B1 | C1 | D1 | 0.25 | 10.0 | 1.0 | + | + | ++ | ++ | ++ | ++ |
| Example | 149 | A1 | B1 | C1 | D1 | 0.25 | 10.0 | 2.0 | + | ++ | ++ | ++ | ++ | ++ |
| Example | 150 | A1 | B1 | C1 | D1 | 0.25 | 10.0 | 5.0 | + | ++ | ++ | ++ | ++ | ++ |
| Example | 151 | A1 | B1 | C1 | D1 | 0.25 | 10.0 | 10.0 | + | ++ | ++ | ++ | ++ | ++ |
| Example | 152 | A1 | B1 | C1 | D2 | 0.25 | 10.0 | 1.0 | + | + | ++ | ++ | ++ | ++ |
| Example | 153 | A1 | B1 | C1 | D2 | 0.25 | 10.0 | 5.0 | + | ++ | ++ | ++ | ++ | ++ |
| Example | 154 | A1 | B1 | C1 | D2 | 0.25 | 10.0 | 10.0 | + | ++ | ++ | ++ | ++ | ++ |
| Example | 155 | A1 | B1 | C1 | D2 | 0.25 | 10.0 | 20.0 | + | ++ | ++ | + | ++ | ++ |
| Example | 156 | A1 | B1 | C1 | D2 | 0.25 | 10.0 | 30.0 | + | ++ | ++ | + | ++ | ++ |
| Example | 157 | A2 | B1+B2 | C2 | D1 | 0.30 | 20.0 | 10.0 | + | ++ | ++ | ++ | ++ | ++ |
| Example | 158 | A3 | B1+B2 | C2 | D2 | 0.30 | 20.0 | 10.0 | + | ++ | ++ | ++ | ++ | ++ |

| | | | | | | | | | | | | | | |
|---|---|---|---|---|---|---|---|---|---|---|---|---|---|---|
| *The ratio between two compounds when used in A or B is 1 : 1. | | | | | | | | | | | | | | |

From the results of the examples, the electrical steel sheets with insulation coatings of the present invention were found to be excellent in all of the following: the punchability, coating adhesion property, coating film property after annealing (iron loss), TIG weldability, corrosion resistance, and tension pad resistance, as shown in Table 1.

### INDUSTRIAL APPLICABILITY

The present invention can provide an electrical steel sheet with an insulation coating, which is excellent in punchability, coating adhesion property, and coating film property after annealing that is a unique property of electrical steel sheets, without any chromium compound being contained in the insulation coating.

## Claims

1. An electrical steel sheet with an insulation coating formed by applying a surface-treatment agent to at least one side of the electrical steel sheet and drying the surface-treatment agent,
wherein the surface-treatment agent contains trialkoxysilane and/or dialkoxysilane (A) in which a substituent bound to Si is constituted only by at least one non-reactive substituent selected from the group consisting of hydrogen, an alkyl group, and a phenyl group; a silane coupling agent (B), at a mass ratio (A/B) of 0.05 to 1.0; and
plate-like silica (C) having an average particle size of 0.08 µm to 0.9 µm and an aspect ratio of 10 to 100, and the content of the plate-like silica is 2 mass% to 30 mass% with respect to a total solid content of the surface-treatment agent.

2. The electrical steel sheet with an insulation coating according to Claim 1, wherein the plate-like silica (C) has an average particle size of 0.1 µm to 0.3 µm and an aspect ratio of 10 to 50.

3. The electrical steel sheet with an insulation coating according to Claim 1 or 2, wherein the surface-treatment agent contains 0.5 mass% to 30 mass% of a lubricant (D) with respect to a total solid content of the surface-treatment agent.

## Patentansprüche

1. Elektro-Stahlblech mit einer Isolationsbeschichtung, die durch Aufbringen eines Oberflächenbehandlungsmittels auf wenigstens eine Seite des Elektro-Stahlblechs und Trocknen des Oberflächenbehandlungsmittels gebildet wird,
wobei das Oberflächenbehandlungsmittel Trialkoxysilan und/oder Dialkoxysilan (A), in denen ein Si-gebundener Substituent nur durch einen nicht reaktiven Substituenten gebildet wird, der aus der Gruppe ausgewählt wird, die aus Wasserstoff, einer Alkylgruppe und einer Phenylgruppe besteht; einen Silan-Haftvermittler (B) bei einem Masseverhältnis (A/B) von 0,05 zu 1,0 und
einen plattenartigen Siliziumoxid (C) mit einer durchschnittlichen Partikelgröße von 0,08 µm bis 0,9 µm und einem Seitenverhältnis von 10 zu 100 enthält, wobei der Inhalt des plattenartigen Siliziumoxids 2 Masse-% bis 30 Masse-% mit Bezug auf einen gesamten Feststoffgehalt des Oberflächenbehandlungsmittels beträgt.

2. Elektro-Stahlblech mit einer Isolationsbeschichtung nach Anspruch 1, wobei das plattenartige Siliziumoxid (C) eine durchschnittliche Partikelgröße von 0,1 µm bis 0,3 µm und ein Seitenverhältnis von 10 zu 50 hat.

3. Elektro-Stahlblech mit einer Isolationsbeschichtung nach Anspruch 1 oder 2, wobei das Oberflächenbehandlungsmittel 0,5 Masse-% bis 30 Masse-% eines Schmiermittels (D) mit Bezug auf einen gesamten Feststoffgehalt des Oberflächenbehandlungsmittels enthält.

## Revendications

1. Tôle d'acier électrique avec un revêtement isolant formé en appliquant un agent de traitement de surface sur au moins un côté de la tôle d'acier électrique et en séchant l'agent de traitement de surface,
l'agent de traitement de surface contenant un trialcoxysilane et/ou un dialcoxysilane (A) dans lequel un substituant lié à Si est constitué d'au moins un substituant non réactif choisi dans le groupe constitué d'hydrogène, d'un groupe alkyle et d'un groupe phényle ; un agent de couplage silane (B), dans un rapport massique (A/B) de 0,05 à 1,0 ; et
de la silice lamellaire (C) ayant une granulométrie moyenne de 0,08 µm à 0,9 µm et un rapport d'aspect de 10 à 100, et la teneur en silice lamellaire allant de 2 % en masse à 30 % en masse par rapport à une teneur totale en solides de l'agent de traitement de surface.

2. Tôle d'acier électrique avec un revêtement isolant selon la revendication 1, la silice lamellaire (C) ayant une granulométrie moyenne de 0,1 µm à 0,3 µm et un rapport d'aspect de 10 à 50.

3. Tôle d'acier électrique avec un revêtement isolant selon la revendication 1 ou 2, l'agent de traitement de surface contenant de 0,5 % en masse à 30 % en masse d'un lubrifiant (D) par rapport à une teneur totale en solides de l'agent de traitement de surface.
